# EUROPEAN PATENT SPECIFICATION

(11) **EP 4 596 564 B1**
(45) Date of publication and mention of the grant of the patent: **23.09.2026**
(21) Application number: 24155705.7
(22) Date of filing: 05.02.2024
(51) Int. Cl.: C07F 15/02, C09D 167/08, C11D 3/16

(54) **METHOD FOR PREPARING A HOMOGENEOUS SOLUTION OF A METAL BISPIDONE CHELATE COMPLEX FOR OXIDATIVELY DRYING SYSTEMS**
VERFAHREN ZUR HERSTELLUNG EINER HOMOGENEN LÖSUNG EINES METALLBISPIDONCHELATKOMPLEXES FÜR OXIDATIV TROCKNENDE SYSTEME
PROCÉDÉ DE PRÉPARATION D'UNE SOLUTION HOMOGÈNE D'UN COMPLEXE CHÉLATE DE BISPIDONE MÉTALLIQUE POUR DES SYSTÈMES DE SÉCHAGE OXYDATIF

(43) Date of publication of application: 06.08.2025
(73) Proprietor: hubergroup Deutschland GmbH, 85551 Kirchheim (DE)
(72) Inventor: KLAUSNITZER, Sylvia, 83052 Bruckmühl (DE); BACK, Justus, 81829 München (DE)
(74) Representative: Henkel & Partner mbB

(56) References cited:
- WO-A1-2023/281046
- CN-A- 103 602 268
- US-B1- 9 914 848
- DATABASE CAPLUS [online] 1 January 2018 (2018-01-01), PPG ARCHITECTURAL FINISHES ET AL: "Refinish coating composition and method of coating a substrate - US9914848 B1", XP093171761, Database accession no. 2018:863858

## Description

The present invention relates to a method for preparing a solution of one or more metal bispidone complexes in a solvent comprising at least one alkylester of at least one alcohol as well as to the use of the so obtained solution of one or more metal bispidone complexes in a solvent comprising at least one alkylester of at least one alcoho, wherein the solvent contains at least 30% by weight of diacetin.

Metal bispidone chelate complexes are effective catalysts which are used for oxidation reactions with atmospheric oxygen. Therefore, solutions of metal bispidone chelate complexes in a solvent are used for bleaching of colored stains in washing and cleaning compositions. Other applications for solutions of such metal bispidone chelate complexes in a solvent are their use as a siccative for the drying of unsaturated binders, such as alkyd resins and/or oil-based varnishes and/or unsaturated polyesters in inks and coatings. Usually, metal bispidone chelate complexes are prepared by reacting a bispidone ligand with a metal salt solution. Such a process is described in US 8,846921 B1. More specifically, the process comprises the steps of mixing a solution of the bispidone ligand in acetone and an aqueous manganese or iron salt solution and of allowing to react the so obtained mixture so as to form the metal bispidone chelate complex. While the bispidone ligand has a very good solubility in acetone, the formed metal bispidone chelate complex has a low solubility in acetone/water mixtures. On account of this reason, the formed metal bispidone chelate complex precipitates. The metal bispidone chelate complex must then be separated from the liquid and must then be dissolved in a suitable solvent so as to form a solution.

Another process for preparing a solution of a metal bispidone chelate complex in a solvent is disclosed in EP 2 531 504 B1. This process comprises the successive addition of a dispersion of a bispidone ligand in a diol or polyol as solvent to an aqueous solution of a manganese or iron salt. The dispersed bispidone ligand reacts with the metal ions to the metal bispidone chelate complex, which dissolves in the diol or polyol so that a solution of metal bispidone chelate complex in diol or polyol is obtained. Thus, the respective process bases on a heterogeneous reaction of the bispidone ligand and the metal ions.

Consequently, in both aforementioned processes dispersions are used. However, the handling of dispersions in production and in particular in a large scale production setup is disadvantageous, because the susceptibility for sedimentation leads to a very limited stability when the dispersions are not stirred continuously. However, a more intensive stirring in order to yield a homogeneous dispersion requires more energy. Another drawback of the handling of dispersions is the fact that the particle size distribution of the final dispersion is determined by the particle size of the powder being used for the preparation of the dispersion. For instance, inconsistent particle size distributions of the solids or the formation of big lumps during the storage of the powder will lead to a different dispersion and may lead in the case of the formation of lumps to problems in the production process. Moreover, changes in the quality of the used salts, such as for example changes in the particle size, will lead to less complications as well as easier and faster processability when the solids are dissolved in the first step.

US 9,914,848 discloses a coating composition comprising a chain-stopped alkyd resin, an acrylic polymer, a metallic drier, an adhesion promoter and a solvent, wherein the metallic dryer of the coating composition may beBorchi^{®} Oxy-Coat from OMG Borchers GmbH.

WO 2023/281046 A1 relates to bispidone ligands and transition metal complexes thereof, especially iron and manganese complexes thereof.

CN 103 602 268 A discloses a method comprising the step that a saturated solution of iron and manganese chloride in water is added to a solution of a mixture of two ligands in acetone and mixed resulting in a yellow suspension, from which a large quantity of solid is precipitated. Afterwards, the obtained acetone cake is washed and dried so as to obtain a powder, which is then dissolved in 1,2-propane diol in order to obtain a drier solution.

In view of this, the object underlying the present invention was to provide a method for preparing a solution of one or more metal bispidone chelate complexes in only one process step, which does not require the preparation of any dispersion, but may be performed exclusively with solutions, wherein this solution is suitable to be used as siccative for oxidative drying systems in coatings and inks.

In accordance with the present invention, this object is satisfied by providing a method for preparing a solution of one or more metal complexes according to the general formula (1) in a solvent comprising at least one alkylester of at least one alcohol, wherein the method comprises the steps of:
a) providing a solution of at least one metal salt in a solvent comprising water or a mixture of water and at least one alkylester of at least one alcohol, wherein the at least one metal of the at least one metal salt is selected from the group consisting of Mn, Cu, Fe, Zn, Ti, V, Mo, W, Tc, In, Ga, Y, Re and combinations thereof,
b) providing a solution of a bispidone ligand according to the general formula (2) in a solvent comprising at least one alkylester of at least one alcohol, wherein the solvent contains at least 30% by weight of diacetin, and
c) adding the solution of a bispidone ligand provided in step b) into the solution of at least one metal salt provided in step a) or vice versa, and allowing to react the so obtained mixture so as to obtain the solution of one or more metal complexes according to the general formula (1) in the solvent comprising at least one alkylester of at least one alcohol,
wherein the general formula (1) is:

[MₐL_{b}X_{c}]Y_{d} (1)

wherein
- M: is an ion being selected from the group consisting of ions of Mn, Cu, Fe, Zn, Ti, V, Mo, W, Tc, In, Ga, Y, Re and combinations thereof,
- L: is a ligand according to the general formula (2): 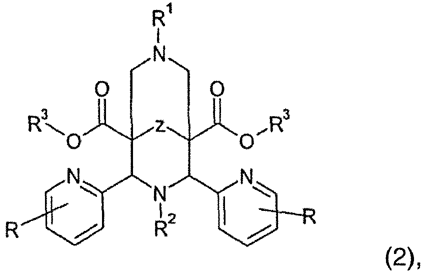
wherein
- R: is hydrogen, hydroxyl or C₁₋₄-alkyl,
- R¹: is C₁₋₄-alkyl, C₆₋₁₀-aryl, pyridinyl- C₁₋₄-alkyl or (CH₂)ₖN(C₁₋₄-alkyl)₂,
- R²: is C₁₋₂₀-alkyl, C₆₋₁₀-aryl or pyridinyl- C₁₋₄-alkyl,
- R³: is C₁₋₄-alkyl,
- Z: is C=O or C(OH)₂ and
- k: is a number from 1 to 6,
- X: is a coordinating compound,
- Y: is a counter ion
- a: is a number from 1 to 2,
- b: is a number from 1 to 2,
- c: is a number from 0 to 4 and
- d: is a number from 0 to 8.

This solution bases on the surprising finding that alkylesters of at least one alcohol do not only have an excellent solubility for bispidone ligands, an excellent solubility for metal bispidone chelate complexes as well as an excellent miscibility with water, but that alkylesters of at least one alcohol are in particular suitable as solvent for the reaction of metal salts with bispidone ligands so as to allow to obtain in homogenous reaction a solution of a metal bispidone chelate complex from a solution of at least one metal salt in a solvent comprising water or a mixture of water and at least one alkylester of at least one alcohol, and from a solution of a bispidone ligand according to the general formula (2) in a solvent comprising at least one alkylester of at least one alcohol in high yield.

A solution means in accordance with the present invention a mixture of two or more chemical components, which are liquid, i.e. the liquid mixture is homogeneous as well as transparent and does not comprise any particles. This may be for instance measured by centrifuging 100 ml of a potential solution in a centrifuge for 30 minutes at 1,000 g and by then determining, whether there is any visible sediment. If there is any visible sediment, it is not a solution, and, if there is no visible sediment, it is a solution.

The present invention is not particularly limited concerning the concentration of the solution of at the least one metal salt being provided in step a). Good results are in particular obtained, when a solution is provided in step a), which contains, based on the metal content of the metal salt, 0.1 to 20% by weight of at least one metal salt in a solvent comprising water or a mixture of water and at least one alkylester of at least one alcohol, wherein the at least one metal of the at least one metal salt is selected from the group consisting of Mn, Cu, Fe, Zn, Ti, V, Mo, W, Tc, In, Ga, Y, Re and combinations thereof. More preferably, a solution is provided in step a), which contains, based on the metal content of the at least one metal salt, 5 to 15% by weight and most preferably 7 to 12% by weight of at least one metal salt in a solvent comprising water or a mixture of water and at least one alkylester of at least one alcohol, wherein the at least one metal of the at least one metal salt is selected from the group consisting of Mn, Cu, Fe, Zn, Ti, V, Mo, W, Tc, In, Ga, Y, Re and combinations thereof.

If in step a) a solution is provided, which contains a solvent comprising a mixture of water and at least one alkylester of at least one alcohol, the at least one alkylester of at least one alcohol of the solvent used in step a) is preferably the same at least one alkylester of at least one alcohol, which is used in the solvent of step b).

Moreover, if in step a) a solution is provided, which contains a solvent comprising a mixture of water and at least one alkylester of at least one alcohol, it is preferred that the solvent comprises 5 to 90% water and 10 to 95% of the at least one alkylester of at least one alcohol.

More preferably, in step a) a solution is provided, which contains a solvent consisting of water.

In accordance with the present invention, the at least one metal of the metal salt used in step a) is selected from the group consisting of Mn, Cu, Fe, Zn, Ti, V, Mo, W, Tc, In, Ga, Y, Re and combinations thereof. More preferably, the at least one metal of the at least one metal salt used in step a) is manganese or iron, such as Mn(II), Mn(III), Mn(IV), Fe(II), Fe(III) or Fe(IV), and most preferably iron, such as Fe(II), Fe(lll) or Fe(IV).

Particularly preferable, the solution of at least one metal salt in a solvent comprising water or a mixture of water and at least one alkylester of at least one alcohol being provided in step a) does not contain chromium or cobalt in addition to the metal being selected from the group consisting of Mn, Cu, Fe, Zn, Ti, V, Mo, W, Tc, In, Ga, Y, Re and combinations thereof.

In a further development of the idea of the present invention, it is suggested that at least one metal salt of the solution of at least one metal salt in a solvent comprising water or a mixture of water and at least one alkylester of at least one alcohol being provided in step a) is selected from the group consisting of halides, hydroxides, carbonates, carboxylates, citrates, acetates, oxalates, nitrates, sulfates, sulfides, phosphates, chlorates, perchlorates, isocyanates, thiocyanates, and their partially protonated forms. The metal halide may be in particular a metal chloride or metal bromide.

In accordance with a particular preferred embodiment of the present invention, the solvent of the solution of at least one metal salt provided in step a) contains at least 50% by weight, preferably at least 80% by weight, more preferably at least 90% by weight, even more preferably at least 95% by weight, still more preferably at least 99% by weight and most preferably 100% by weight of water or a mixture of water and one or more alkylesters of at least one alcohol, i.e. most preferably the solution of at least one metal salt provided in step a) consists of one or more metal salts being dissolved in a solvent consisting of water or a mixture of water and one or more alkylesters of at least one alcohol.

Concerning the bispidone ligand concentration of the solution being provided in step b), the present invention is not particularly limited. Good results are in particular obtained, when a solution is provided in step b), which contains 0.1 to 20% by weight of the bispidone ligand according to the general formula (2) in a solvent comprising at least one alkylester of at least one alcohol, wherein the solvent contains at least 30% by weight of diacetin. More preferably, a solution is provided in step b), which contains, 5 to 15% by weight and most preferably 7 to 12% by weight of the bispidone ligand according to the general formula (2) in a solvent comprising at least one alkylester of at least one alcohol, wherein the solvent contains at least 30% by weight of diacetin,.

In order to allow a reaction of the bispidone ligand and of the metal ions in step c) in liquid phase, it is further preferred that the solvent of the solution of a bispidone ligand provided in step b) is between 20°C and 60°C a liquid. In other words, it is preferred that the solvent of the solution of a bispidone ligand provided in step b) has a freezing point below 20°C and a boiling point above 60°C.

In accordance with a particular preferred embodiment of the present invention, the solvent of the solution of a bispidone ligand provided in step b) contains at least 50% by weight, preferably at least 70% by weight, more preferably at least 80% by weight, still more preferably at least 90% by weight, yet more preferably at least 95% by weight and most preferably 100% by weight of one or more alkylesters of at least one alcohol. In other words, it is most preferred that the solvent of the solution of a bispidone ligand provided in step b) consists of one or more alkylesters of at least one alcohol.

Good results are in particular obtained, when the at least one alkylester of at least one alcohol used in step b) and optionally also the at least one alkylester of at least one alcohol in step a), when in step a) a mixture of water and of at least one alkylester of at least one alcohol is used, is a C₁₋₈-alkylester of at least one alcohol, more preferably a C₁₋₆-alkylester of at least one alcohol, even more preferably a C₁₋₄-alkylester of at least one alcohol, still more preferably a C₁₋₃-alkylester of at least one alcohol, yet more preferably a C₁₋₂-alkylester of at least one alcohol and most preferably an acetylester of at least one alcohol.

In principle, the present invention is not particularly restricted concerning the chemical nature of the at least one alcohol used for preparing the at least one alkylester of the at least one alcohol. Preferably, the at least one alkylester of at least one alcohol used in step b) and optionally also the at least one alkylester of at least one alcohol in step a), when in step a) a mixture of water and of at least one alkylester is used, is selected from the group consisting of alkylesters of a monoalcohol, alkylesters of a dialcohol, fully esterified polyols, partially esterified polyols and combinations thereof. A polyol means in this connection an alcohol comprising three or more hydroxyl groups, whereas fully esterified polyol means an ester, in which all hydroxyl groups of the polyol are esterified with an aliphatic carboxylic acid, and partially esterified polyol means an ester, in which one to less than all hydroxyl groups of the polyol are esterified with an aliphatic carboxylic acid.

In a further development of the idea of the present invention it is proposed that the at least one alkylester of at least one alcohol used in step b) and optionally also the at least one alkylester of at least one alcohol in step a), when in step a) a mixture of water and of at least one alkylester of at least one alcohol is used, is a partially esterified diol or polyol. Good results are in particular obtained, when the diol or polyol is selected from the group consisting of 1,4-butanediol, 1,2,4-butanetriol, 1,2,6-hexanetriol, 3-methyl-pentane-1,3,5-triol, glycerol, diglycerol, pentaerythritol, di-trimethylol propane, erythritol, hydroxymethyl hexanediol, trimethylol butane, trimethylol ethane, trimethylol hexane, trimethylol octane, trimethylol propane, neopentyl glycol, ethylene glycol, diethylene glycol, 1,2-propylene glycol, 1,3-propylene glycol, dipropylenglycol and combinations thereof.

In accordance with the present invention, the solvent of the solution of a bispidone ligand provided in step b) and optionally also the solvent of the solution of at least one metal salt provided in step a) contains at least 30% by weight diacetin. It has been found in the present invention that diacetin is perfectly well miscible with water and has excellent solubility properties for bispidone ligands as well as for metal complexes, in which the metal is selected from the group consisting of Mn, Cu, Fe, Zn, Ti, V, Mo, W, Tc, In, Ga, Y, Re and combinations thereof. Good results are in particular obtained, when the solvent of the solution of a bispidone ligand provided in step b) and optionally also the solvent of the solution of at least one metal salt provided in step a) contains at least 40% by weight of diacetin, i.e. the diacety-lester of glycerol.

In accordance with one particularly preferred variant of this embodiment, the solvent of the solution of a bispidone ligand provided in step b) and optionally also the solvent of the solution provided in step a) contains at least 80% by weight, more preferably at least 90% by weight of diacetin, still more preferably at least 95% by weight of diacetin, yet more preferably at least 99% by weight of diacetin and most preferably 100% by weight of diacetin.

In accordance with an alternatively particularly preferred variant of this embodiment, the solvent of the solution of a bispidone ligand provided in step b) and optionally also the solvent of the solution of at least one metal salt provided in step a) contains two or more alkylesters of glycerol. Preferably, the solvent of the solution of a bispidone ligand provided in step b) and optionally also the solvent of the solution of at least one metal salt provided in step a) contains or most preferably consists of i) a diester of glycerol and a triester of glycerol or ii) a monoester of glycerol, a diester of glycerol and a triester of glycerol.

Good results are in particular achieved, when the solvent of the solution of a bispidone ligand provided in step b) and optionally also the solvent of the solution of at least one metal salt provided in step a) contains, based on 100% by weight of the solvent, 15 to 50% by weight of monoacetin, 30 to 60% by weight of diacetin, 10 to 30% by weight of triacetin and 0 to 10% by weight of glycerol.

Concerning the optional residue X of the general formula (I), the present invention is not particularly limited. For instance, the residue X in the general formula (1) is a coordinating compound selected from single, double and, triple charged anions or uncharged molecules capable of mono-, bi- or tridentate coordination to a metal. More preferably, the residue X in the general formula (1) is selected from the group consisting of OH⁻, NO₃⁻, NO, S²⁻, R^{a}S⁻, PO₄³⁻, H₂O, CO₃²⁻, R^{b}OH, R^{b}SH, Cl⁻, Br, CN⁻, ClO₄⁻, R^{a}COO⁻, NCO⁻, SCN⁻, amine functional compounds and SO₄²⁻, wherein R^{a} is H or C₁₋₄-alkyl and R^{b} is C₁₋₄-alkyl.

Also, regarding the optional counter ion Y of the general formula (I), the present invention is not particularly limited. Preferably, the residue Y is a noncoordinating counter ion, which ensures the charge balance of the complex in accordance with the general formula (I). More preferably, the counterion Y in the general formula (1) is selected from the group consisting of R^{c}SO₄⁻, SO₄²⁻, NO₃⁻, Cl⁻, Br, I⁻, ClO₄⁻, BF₄⁻, PF₆⁻ and R^{c}SO₃⁻, citrates, oxalates, including their protonated ions, NCO⁻, and SCN⁻, wherein R^{c} is H or C₁₋₄-alkyl.

Suitable examples for bispidone ligands in accordance with the general formula (2) are dimethyl 2,4-di(2-pyridyl)-3-methyl-7-(pyridin-2-ylmethyl)-3,7-diazabicyclo[3.3.1]nonan-9-one-1,5-dicarboxylate dimethyl 2,4-di(2-pyridyl)3-(pyridin-2-ylmethyl)-7-methyl-3,7-diazabicyclo[3.3.1]nonan-9-one-1,5-dicarboxylate, diethyl 2,4-di(2-pyridyl)-3-methyl-7-(pyridin-2-ylmethyl)-3,7-diazabicyclo[3.3.1]nonan-9-one-1,5-dicarboxylate, dimethyl 2,4-di(2-pyridyl)-3,7-bis(pyridin-2-ylmethyl)-3,7-diazabicyclo[3.3.1]nonan-9-one-1,5-dicarboxylate, dimethyl 2,4-di(2-pyridyl)-3,7-dimethyl-3,7-diazabicyclo[3.3.1]nonan-9-one-1,5-dicarboxylate, diethyl 2,4-di(2-pyridyl)-3,7-dimethyl-3,7-diazabicyclo[3.3.1]nonan-9-one-1,5-dicarboxylate, dimethyl 2,4-di(2-pyridyl)-3-methyl-7-(N,N'-dimethylethylamine)-3,7-diazabicyclo[3.3.1]nonan-9-one-1,5-dicarboxylate and the corresponding dihydroxy ketals.

Synthesis methods for producing such bispidone ligands are known and for instance described in WO 2006/133869 A1 and in DE 601 20 781. Each of these methods may be used for preparing the bispidone ligands for use in the method in accordance with the present invention.

In accordance with a particular preferred embodiment of the present invention, the solution of a bispidone ligand in a solvent comprising at least one alkylester of at least one alcohol, wherein the solvent contains at least 30% by weight of diacetin, provided in step b) is not added as in step c) as a whole at the same time into the solution of at least one metal salt provided in step a), but is added subsequently and preferably dropwise into the solution of at least one metal salt in a solvent comprising water or a mixture of water and at least one alkylester of at least one alcohol provided in step a).

In the alternative embodiment of step c), in which the solution of at least one metal salt in a solvent comprising water or a mixture of water and at least one alkylester of at least one alcohol provided in step a) is added into the solution of a bispidone ligand in a solvent comprising at least one alkylester of at least one alcohol, wherein the solvent contains at least 30% by weight of diacetin, provided in step b), it is likewise preferred that the solution of at least one metal salt provided in step a) is not added as a whole at the same time into the solution of a bispidone ligand provided in step b), but is added subsequently and preferably dropwise into the solution of a bispidone ligand provided in step b).

Good results are in particular obtained, when - after the addition of the solution of a bispidone ligand in a solvent comprising at least one alkylester of at least one alcohol, wherein the solvent contains at least 30% by weight of diacetin, provided in step b) into the solution of at least one metal salt in a solvent comprising water or a mixture of water and at least one alkylester of at least one alcohol provided in step a) or vice versa, i.e. after the addition of the solution of at least one metal salt in a solvent comprising water or a mixture of water and at least one alkylester of at least one alcohol provided in step a) into the solution of a bispidone ligand in a solvent comprising at least one alkylester of at least one alcohol, wherein the solvent contains at least 30% by weight of diacetin, provided in step b) - the molar ratio of the at least one metal salt and the bispidone ligand in the mixture is between 0.9:1 to 1.1:1 and preferably 0.95:1 to 1.05:1, such as 1:1.

In a further development of the idea of the present invention it is suggested that after the addition of the solution of a bispidone ligand in a solvent comprising at least one alkylester of at least one alcohol, wherein the solvent contains at least 30% by weight of diacetin, provided in step b) into the solution of at least one metal salt in a solvent comprising water or a mixture of water and at least one alkylester of at least one alcohol provided in step a) or vice versa, i.e. after the addition of the solution of at least one metal salt in a solvent comprising water or a mixture of water and at least one alkylester of at least one alcohol provided in step a) into the solution of a bispidone ligand in a solvent comprising at least one alkylester of at least one alcohol, wherein the solvent contains at least 30% by weight of diacetin, provided in step b), the metal content in the mixture is 0.001 to 2% by weight, preferably 0.5 to 1.5% by weight and more preferably 0.8 to 1.2% by weight.

Good results are in particular obtained, when in step c) the solution of a bispidone ligand in a solvent comprising at least one ester of at least one alcohol, wherein the solvent contains at least 30% by weight of diacetin, provided in step b) is added into the solution of at least one metal salt in a solvent comprising water or a mixture of water and at least one alkylester of at least one alcohol provided in step a) or vice versa, i.e. when in step c) the solution of at least one metal salt in a solvent comprising water or a mixture of water and at least one alkylester of at least one alcohol provided in step a) is added into the solution of a bispidone ligand in a solvent comprising at least one ester of at least one alcohol, wherein the solvent contains at least 30% by weight of diacetin, provided in step b), and the so obtained mixture is allowed to react at a temperature of 20°C to 60°C and preferably for a time of 10 minutes to 24 hours, more preferably for 1 to 10 hours and most preferably for 3 to 7 hours.

In dependency of the later application, the method in accordance with the present invention may further comprise a step d) of diluting the solution of one or more metal complexes according to the general formula (1) in a solvent comprising at least one alkylester of at least one alcohol obtained in step c) by adding the solvent comprising at least one alkylester of at least one alcohol into it so that the concentration of the one or more metal complexes according to the general formula (1) in the solution is 0.01 to 2% by weight. It is preferred that the at least one alkylester of at least one alcohol of the solvent used for the dilution is the same alkylester, which is used in the solvent of the solution of a bispidone ligand provided in step b) and optionally in the solvent of the solution of at least one metal salt provided in step a).

In accordance with another aspect, the present invention relates to a solution of one or more metal complexes according to the general formula (1) in a solvent comprising at least one alkylester of at least one alcohol being obtainable with a method as described above.

In accordance with still another aspect, the present invention relates to the use of the aforementioned solution of one or more metal complexes according to the general formula (1) in a solvent comprising at least one alkylester of at least one alcohol for the oxidative drying of a coating, a varnish and/or an ink containing oxidatively drying binders and/or oils, and as bleaching agent, such as in washing and cleaning products.

The iron bispidone complex in accordance with the present invention can also be used in combination with further siccative compounds. Preferably, the aforementioned solution of one or more metal complexes according to the general formula (1) in a solvent comprising at least one alkylester of at least one alcohol is used in combination with at least one further siccative compound, wherein the at least one further siccative compound is preferably selected from the group of manganese compounds, vanadium compounds, zirconium compounds, copper compounds, strontium compounds, calcium compounds, zinc compounds, lithium compounds, peroxide compounds, Lewis acids of potassium and/or aluminum, acetates and/or halides of potassium and/or aluminum, and is more preferably selected from the group of metal salts of organic acids, metal complexes of nitrogen donor ligands with the ligands being different from the ligand used in a method in accordance with any of claims 1 to 20, and peroxides.

The following examples illustrate some specific examples of drier combinations. For instance, the iron bispidone complex in accordance with the present invention may be used in a drier composition for an autoxidizable alkyd based coating composition comprising (a) at least one metal complex comprising: at least one metal salt comprising at least one metal cation which is selected from the group consisting of iron and manganese and at least one anion and at least one nitrogen donor ligand which is selected from the group comprising monodentate, bidentate, tridentate, pentadentate, and hexadentate nitrogen donor ligands, and (b) at least one non-ionic emulsifier. Moreover, the iron bispidone complex in accordance with the present invention may be used in an accelerator solution comprising at least one organic solvent, a manganese salt, a copper salt or a combination thereof, and an iron complex of a tetradentate, pentadentate or hexadentate nitrogen donor ligand. Alternatively, the iron bispidone complex in accordance with the present invention may be used in a drier composition for an autoxidizable alkyd based coating composition, comprising a) at least one iron complex comprising iron and at least one nitrogen donor ligand, wherein said at least nitrogen donor ligand is selected from the group comprising tridentate, tetradentate, pentadentate and hexadentate nitrogen donor ligands; b) at least one metal salt of a carboxylic acid, wherein the metal is selected from the group comprising Mn, Ce, V, and Cu, and c) at least one ligand comprising at least one moiety selected from the group comprising 1 ,4,7-tri-azacyclononanyl, 2,2'-bipyridyl, 1 , 10-phenantrolinyl, imidazolyl, pyrazolyl, por-phyrinyl, aliphatic, cycloaliphatic, and aromatic amines. Still alternatively, the iron bispidone complex in accordance with the present invention may be used in a drier composition for an autoxidizable alkyd based coating composition comprising: a) at least one metal complex comprising a metal and at least one nitrogen donor ligand, wherein the metal is selected from the group consisting of Fe and Mn, and wherein said at least one nitrogen donor ligand comprises one or more monodentate, bidentate, tridentate, tetradentate, pentadentate and/or hexadentate nitrogen donor ligands, b) at least one K salt of an organic acid, wherein said organic acid comprises octanoic acid, naphthenic acid, neodecanoic acid, 2-ethylhexanoic acid or a mixture of these acids, and c) at least one other metal salt of an organic acid, wherein the metal in the at least one other metal salt of an organic acid comprises Co, Ca, Zr and/or Sr. In addition, the iron bispidone complex in accordance with the present invention may be used in a coating composition comprising an alkyd-based resin and a drier composition comprising an iron ligand complex using iron and at least one bispidone ligand and a vanadium compound. Also, the iron bispidone complex in accordance with the present invention may be used in a solvent-containing coating composition for lacquer coatings containing a) at least one oxidatively drying organic binder, b1) at least one first primary drying agent based on iron, in particular comprising or consisting of at least one complex compound of iron, in particular a complex salt of iron, b2) at least one second primary drying agent based on manganese, in particular comprising or consisting of a complex compound of manganese, in particular a complex salt of manganese, c1) at least one first secondary drying agent, comprising or consisting of at least one organic salt of zirconium and/or strontium, and further comprising ligands which are able to complex iron and/or manganese species and are selected from at least one mono-, di-, tri-, tetra-, penta- and/or hexadentate nitrogen donor ligand. Alternatively, the iron bispidone complex in accordance with the present invention may be used in a solvent-containing coating composition for paint coatings, in particular for architectural paints or constituents thereof, containing or consisting of at least one oxidatively drying organic binding agent, at least one primary drier based on iron, comprising or consisting of at least one complex salt of iron, at least one first secondary drier comprising or consisting of at least one organic salt of zirconium, strontium, lithium, or aluminum, in particular an organic salt of zirconium and/or strontium, at least one iron complex ligand, in particular selected from monodentate, didentate, tridentate, tetradentate, pentadentate and hexadentate nitrogen-donor ligands and optionally at least one additive. In a further alternative the iron bispidone complex in accordance with the present invention may be used in an oxidatively drying formulation comprising an unsaturated resin or alkyd, at least one metal salt of a carboxylic acid, the at least one metal salt of a carboxylic acid being selected from manganese, zirconium, strontium, lithium, calcium, aluminum, vanadium, cerium, titanium, copper or zinc, or combinations thereof, a peroxide and optionally an inert organic solvent. Still alternatively, the iron bispidone complex in accordance with the present invention may be used in a liquid curable medium comprising an unsaturated resin, a peroxide, an inert or a reactive organic polar solvent, from 0.00001 and 0.02% by weight based on metal of a primary accelerator, wherein the primary accelerator is an iron or manganese complex of a tridentate, tetradentate, pentadentate or hexadentate nitrogen donor ligand in the inert or reactive organic polar solvent. In a further variant, the iron bispidone complex in accordance with the present invention may be used in a process for improving the hardness of an aqueous alkyd resin coating comprising the following steps: adding at least one metal ligand complex wherein the metal is selected from the group consisting of Fe, V, Cu and Mn; and adding at least one ligand selected from the group consisting of bispidone, N, N-bis(pyridin-2- yl-methyl)-bis(pyridin-2-yl)methylamine type, 1,4,7-triazacyclononane (TACN)- type, 1,4,8, 11-tetraazacyclotetradecane (Cyclam) and cross-bridged ligands, and trispicen-type ligands in either a preformed metal ligand complex of the metal and the ligand or formed in-situ as the metal ligand complex; and adding at least two Lewis Acids, pre-blended or formed in-situ, the Lewis Acids being preferably acetates or halides of Al and K.

Subsequently, the present invention is described by means of illustrating, but not limiting examples.

### Examples

### Example 1

### (Synthesis of 2,4-Di-(2-pyridyl)-3-methyl-7-(pyridin-2-ylmethyl)-3,7-diazabicyclo [3.3.1]nonan-9-on-1,5-di-methyl-dicarboxylat)

A 3L four neck round bottom flask equipped with a mechanical stirrer, a reflux condenser, an addition funnel and a thermometer was charged with 336 g dimethyl acetone dicarboxylate and 450 g isobutanol. The mixture was cooled to 6°C to 8°C from outside using a brine/ice mixture. Afterwards a solution of 402 g 2-formylpyridine in 300 g isobutanol was added dropwise within 20 to 25 minutes followed by the addition of 114 g methylamine (40%) in water within 50 to 60 minutes. Due to the exothermic reaction the addition speed was controlled to avoid that the reaction temperature exceeds 10°C. Subsequently the brine/ice mixture was removed and the water:isobutanol azeotrope was distilled under reduced pressure (8.666 to 90.659 kPa or 65 to 680 mm Hg, respectively) at a temperature of maximum 40°C to 45°C with a simultaneously addition of 360 g of isobutanol. After 2 h the moisture content was below 0.4% by weight and the distillation was stopped. The moisture content was determined by means of a Carl Fisher titration. The vacuum has been lifted and the reactor cooled to room temperature.

For the second reaction step 252 g 2-aminomethylpyridine was added dropwise at room temperature within 5 to 10 minutes. The addition funnel was washed with 210 g isobutanol which was added to the reaction mass, and the mixture kept at 22°C using a water bath before 405 g aqueous formaldehyde (37%) was added dropwise within 30 to 40 minutes. The temperature of the reaction mixture was maintained between 23 and 25°C. Light yellow crystals have precipitated. After the addition the reaction mixture was slowly heated to 55°C to 60°C and maintained at this temperature for 90 minutes. Finally, the water was removed from the mixture by distillation of the isobutanol:water azeotrope and the simultaneous addition of 1080 g isobutanol. At the end of the distillation the moisture content of the reaction mass was determined to be 0.4% by weight. The reaction mass was cooled to 15°C to complete the precipitation of the reaction product. Afterwards, the precipitate was filtered off using a Büchner funnel with a paper filter. The white precipitate was washed three times with cold isobutanol and dried at 50°C at reduced pressure. The purity of the reaction product was analyzed by means of liquid chromatography (Agilent 1260 HPLC instrument equipped with a Agilent InfinityLab Poroshell 120 EC-C18 column and an Agilent G6130A mass spectrometer) to be 96% and the melting point was determined to be 179°C. The melting point was determined using the melting peak maximum employing differential scanning calorimetry (Netsch DSC 204 F1).

### Example 2

### (Synthesis of the dryer composition)

In a 500 mL glass beaker 31.3 g of the ligand synthesized in example 1 was dissolved in 282.1 g technical diacetin (CG Chemikalien GmbH & Co.KG, Laatzen Germany) at maximum 60°C, which comprises 45 to 48% by weight of diacetin, 18 to 25% by weight of monoacetin, 26 to 30% by weight of triacetin and at most 5% by weight of glycerol. The mixture was stirred with a magnetic stirrer until the ligand was completely dissolved.

A 1 L round bottom flask equipped with a magnetic stirrer was charged with 12.0 g FeCl₂ tetrahydrate dissolved in 17.9 g water. Via a dropping funnel the solution of ligand in diacetin was added dropwise within 1 h under continuous stirring. Afterwards, the mixture was stirred for additional 5 h at room temperature and diluted subsequently adding 257.0 g diacetin. The mixture was stirred again over night to yield the final dryer composition. Total stirring time after completion of addition was 17 hours. The depletion of free ligand until a final content of (c(ligand) < 0.1% by weight) was reached, was confirmed by liquid chromatography as described in example 1.

### Example 3

### (Drying performance)

The curing performance of the dryer composition obtained in example 2 has been tested. More specifically, the dryer composition obtained in example 2 was diluted with diacetin by the factor 6.2 to yield a metal content of 0.09% by weight. 1% of the dryer composition was mixed with a linseed oil based alkyd resin (Linkyd 0001, hubergroup India Private Limited, Vapi Gujerat, India).

The curing performance and progress of the oxidative drying process was monitored employing time resolved FTIR spectroscopy. The cis-C=CH vibrational stretching mode at wavenumber 3010 cm⁻¹ can be recorded to track the depletion of the C=C double bond in the alkyd resin during the oxidative curing process (Debrulle et al., Progress in Org. Coatings; 2017 Vol 104, 141pp). Therefore a 10 µm thick film of the alkyd resin containing 1% of the dryer composition was cast on top of the ATR unit of a Fourier-transform infrared (FTIR) spectroscopy (Nicolet^{™} iS^{™} 50 FT-lR-Spectral Photometer). For a period of 6 hours an infrared (IR) spectrum was taken every 30 minutes.

### Comparative Example

### (Drying performance)

The curing performance of the commercial product Borchi Oxy Coat^{™} (Borchers/Milliken & Company, USA) has been tested as described in example 3.

The results are shown in figure 1 displaying the IR absorption at 3010 cm⁻¹ as a function of the time.

A comparison of the results obtained in example 3 and in the comparative example showed that the curing performance of the dryer composition obtained in example 2 is even slightly better than that of the commercial dryer used in the comparative example.

## Claims

1. A method for preparing a solution of one or more metal complexes according to the general formula (1) in a solvent comprising at least one alkylester of at least one alcohol, wherein the method comprises the steps of:
a) providing a solution of at least one metal salt in a solvent comprising water or a mixture of water and at least one alkylester of at least one alcohol, wherein the at least one metal of the at least one metal salt is selected from the group consisting of Mn, Cu, Fe, Zn, Ti, V, Mo, W, Tc, In, Ga, Y, Re and combinations thereof,
b) providing a solution of a bispidone ligand according to the general formula (2) in a solvent comprising at least one alkylester of at least one alcohol, wherein the solvent contains at least 30% by weight of diacetin, and
c) adding the solution of a bispidone ligand provided in step b) into the solution of at least one metal salt provided in step a) or vice versa, and allowing to react the so obtained mixture so as to obtain the solution of one or more metal complexes according to the general formula (1) in the solvent comprising at least one alkylester of at least one alcohol,
wherein the general formula (1) is:
[MₐL_{b}X_{c}]Y_{d} (1)
wherein
M is an ion being selected from the group consisting of ions of Mn, Cu, Fe, Zn, Ti, V, Mo, W, Tc, In, Ga, Y, Re and combinations thereof,
L is a ligand according to the general formula (2): 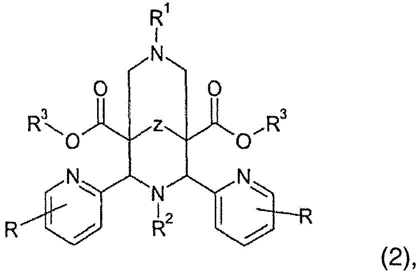 wherein
R is hydrogen, hydroxyl or C₁₋₄-alkyl,
R¹ is C₁₋₄-alkyl, C₆₋₁₀-aryl, pyridinyl- C₁₋₄-alkyl or (CH₂)ₖN(C₁₋₄-alkyl)₂,
R² is C₁₋₂₀-alkyl, C₆₋₁₀-aryl or pyridinyl- C₁₋₄-alkyl,
R³ is C₁₋₄-alkyl,
Z is C=O or C(OH)₂ and
k is a number from 1 to 6,
X is a coordinating compound,
Y is a counter-ion
a is a number from 1 to 2,
b is a number from 1 to 2,
c is a number from 0 to 4 and
d is a number from 0 to 8, and
wherein solution means a mixture of two or more chemical components, which are liquid, wherein after centrifuging 100 ml of the solution in a centrifuge for 30 minutes at 1,000 g no visible sediment is present.

2. The method in accordance with claim 1, wherein in step a) a solution containing, based on the metal content of the at least one metal salt, 0.1 to 20% by weight, preferably 5 to 15% by weight and more preferably 7 to 12% by weight of at least one metal salt in a solvent comprising water or a mixture of water and at least one alkylester of at least one alcohol is provided, wherein the at least one metal of the at least one metal salt is selected from the group consisting of Mn, Cu, Fe, Zn, Ti, V, Mo, W, Tc, In, Ga, Y, Re and combinations thereof.

3. The method in accordance with claim 1 or 2, wherein the solvent of the solution of at least one metal salt provided in step a) contains at least 50% by weight, preferably at least 80% by weight, more preferably at least 90% by weight, even more preferably at least 95% by weight, still more preferably at least 99% by weight and most preferably 100% by weight of water or a mixture of water and one or more alkylesters of at least one alcohol.

4. The method in accordance with any of the preceding claims, wherein in step b) a solution containing 0.1 to 20% by weight, preferably 5 to 15% by weight and more preferably 7 to 12% by weight of the bispidone ligand according to the general formula (2) in a solvent comprising at least 50% by weight, preferably at least 70% by weight, more preferably at least 80% by weight, still more preferably at least 90% by weight, yet more preferably at least 95% by weight and most preferably 100% by weight of one or more alkylesters of at least one alcohol is provided.

5. The method in accordance with any of the preceding claims, wherein the solvent of the solution of a bispidone ligand provided in step b) contains at least 40% by weight of diacetin.

6. The method in accordance with any of the preceding claims, wherein the solvent of the solution of a bispidone ligand provided in step b) contains i) a diester of glycerol and a triester of glycerol or ii) a monoester of glycerol, a diester of glycerol and a triester of glycerol.

7. The method in accordance with claim 6, wherein the solvent of the solution of a bispidone ligand provided in step b) contains, based on 100% by weight of the solvent, 15 to 50% by weight of monoacetin, 30 to 60% by weight of diacetin, 10 to 30% by weight of triacetin and 1 to 10% by weight of glycerol.

8. The method in accordance with any of the preceding claims, wherein after the addition of the solution of a bispidone ligand in a solvent comprising at least one ester of at least one alcohol provided in step b) into the solution of at least one metal salt in a solvent comprising water or a mixture of water and at least one alkylester of at least one alcohol provided in step a) or after the addition of the solution of at least one metal salt in a solvent comprising water or a mixture of water and at least one alkylester of at least one alcohol provided in step a) into the solution of a bispidone ligand in a solvent comprising at least one ester of at least one alcohol provided in step b), the molar ratio of the at least one metal salt and the bispidone ligand in the mixture is between 0.9:1 to 1.1:1 and preferably 0.95:1 to 1.05:1.

9. The method in accordance with any of the preceding claims, wherein after the addition of the solution of a bispidone ligand in a solvent comprising at least one ester of at least one alcohol provided in step b) into the solution of at least one metal salt in a solvent comprising water or a mixture of water and at least one alkylester of at least one alcohol provided in step a) or after the addition of the solution of at least one metal salt in a solvent comprising water or a mixture of water and at least one alkylester of at least one alcohol provided in step a) into the solution of a bispidone ligand in a solvent comprising at least one ester of at least one alcohol provided in step b), the metal content in the mixture is 0.01 to 2% by weight, preferably 0.5 to 1.5% by weight and more preferably 0.8 to 1.2% by weight.

10. The method in accordance with any of the preceding claims, wherein the method further comprises a step d) of diluting the solution of one or more metal complexes according to the general formula (1) in a solvent comprising at least one alkylester of at least one alcohol obtained in step c) by adding the solvent comprising at least one alkylester of at least one alcohol into it so that the concentration of the one or more metal complexes according to the general formula (1) in the solution is 0.01 to 2% by weight.

11. A solution of one or more metal complexes according to the general formula (1) in a solvent comprising at least one alkylester of at least one alcohol being obtainable with a method in accordance with any of the preceding claims.

12. Use of a solution in accordance with claim 11 for the oxidative drying of a coating, a varnish and/or an ink containing oxidatively drying binders and/or oils, or as bleaching agent, such as in washing and cleaning products.

13. Use in accordance with claim 12, wherein a solution in accordance with claim 11 is used in combination with at least one further siccative compound, wherein the at least one further siccative compound is preferably selected from the group of manganese compounds, vanadium compounds, zirconium compounds, copper compounds, strontium compounds, calcium compounds, zinc compounds, lithium compounds, Lewis acids of potassium and/or aluminum, acetates and/or halides of potassium and/or aluminum, and is more preferably selected from the group of salts of organic acids, complexes of nitrogen donor ligands with the ligands being different from the ligand used in a method in accordance with any of claims 1 to 10, and peroxides.

## Patentansprüche

1. Verfahren zum Herstellen einer Lösung eines oder mehrerer Metallkomplexe gemäß der allgemeinen Formel (1) in einem Lösungsmittel, umfassend mindestens einen Alkylester mindestens eines Alkohols, wobei das Verfahren die Schritte umfasst:
a) Bereitstellen einer Lösung mindestens eines Metallsalzes in einem Lösungsmittel, umfassend Wasser oder eine Mischung aus Wasser und mindestens einem Alkylester mindestens eines Alkohols, wobei das mindestens eine Metall des mindestens einen Metallsalzes aus der Gruppe ausgewählt ist, bestehend aus Mn, Cu, Fe, Zn, Ti, V, Mo, W, Tc, In, Ga, Y, Re und Kombinationen davon,
b) Bereitstellen einer Lösung eines Bispidonliganden gemäß der allgemeinen Formel (2) in einem Lösungsmittel, umfassend mindestens einen Alkylester mindestens eines Alkohols, wobei das Lösungsmittel zu mindestens 30 Gew.-% Diacetin enthält, und
c) Zugeben der in Schritt b) bereitgestellten Lösung eines Bispidonliganden zu der in Schritt a) bereitgestellten Lösung mindestens eines Metallsalzes oder umgekehrt, und Reagierenlassen der so erhaltenen Mischung, um die Lösung eines oder mehrerer Metallkomplexe gemäß der allgemeinen Formel (1) in dem Lösungsmittel zu erhalten, umfassend mindestens einen Alkylester mindestens eines Alkohols,
wobei die allgemeine Formel (1) ist:
[MₐL_{b}X_{c}]Y_{d} (1)
wobei
M ein Ion ist, das aus der Gruppe ausgewählt ist, bestehend aus Ionen von Mn, Cu, Fe, Zn, Ti, V, Mo, W, Tc, In, Ga, Y, Re und Kombinationen davon,
L ein Ligand gemäß der allgemeinen Formel (2) ist: 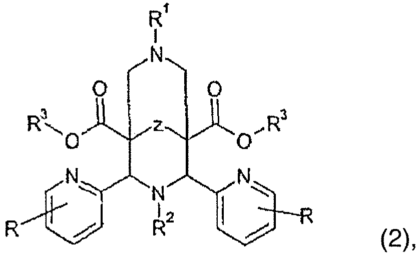
wobei
R Wasserstoff, Hydroxyl oder C₁₋₄-Alkyl ist,
R¹ C₁₋₄-Alkyl, C₆₋₁₀-Aryl, Pyridinyl-C₁₋₄-alkyl oder (CH₂)ₖN(C₁₋₄-Alkyl)₂ ist,
R² C₁₋₂₀-Alkyl, C₆₋₁₀-Aryl oder Pyridinyl-C₁₋₄-Alkyl ist,
R³ C₁₋₄-Alkyl ist,
Z C=O oder C(OH)₂ ist und
k eine Zahl von 1 bis 6 ist,
X eine koordinierende Verbindung ist,
Y ein Gegenion ist
a eine Zahl von 1 bis 2 ist,
b eine Zahl von 1 bis 2 ist,
c eine Zahl von 0 bis 4 ist und
d eine Zahl von 0 bis 8 ist, und
wobei Lösung eine Mischung aus zwei oder mehr chemischen Komponenten bedeutet, die flüssig sind, wobei nach Zentrifugieren von 100 ml der Lösung in einer Zentrifuge 30 Minuten lang bei 1.000 g kein sichtbares Sediment vorhanden ist.

2. Verfahren nach Anspruch 1, wobei in Schritt a) eine Lösung, die, bezogen auf den Metallgehalt des mindestens einen Metallsalzes, zu 0,1 bis 20 Gew.-%, vorzugsweise zu 5 bis 15 Gew.-% und mehr bevorzugt zu 7 bis 12 Gew.-% mindestens ein Metallsalz in einem Lösungsmittel enthält, umfassend Wasser oder eine Mischung aus Wasser und mindestens einem Alkylester mindestens eines Alkohols, bereitgestellt wird, wobei das mindestens eine Metall des mindestens einen Metallsalzes aus der Gruppe ausgewählt ist, bestehend aus Mn, Cu, Fe, Zn, Ti, V, Mo, W, Tc, In, Ga, Y, Re und Kombinationen davon.

3. Verfahren nach Anspruch 1 oder 2, wobei das Lösungsmittel der in Schritt a) bereitgestellten Lösung mindestens eines Metallsalzes mindestens zu 50 Gew.-%, vorzugsweise mindestens zu 80 Gew.-%, mehr bevorzugt mindestens zu 90 Gew.-%, noch mehr bevorzugt mindestens zu 95 Gew.-%, noch weiter bevorzugt mindestens zu 99 Gew.-% und am meisten bevorzugt zu 100 Gew.-% Wasser oder eine Mischung aus Wasser und einem oder mehreren Alkylestern mindestens eines Alkohols enthält.

4. Verfahren nach einem der vorstehenden Ansprüche, wobei in Schritt b) eine Lösung, die zu 0,1 bis 20 Gew.-%, vorzugsweise zu 5 bis 15 Gew.-% und mehr bevorzugt zu 7 bis 12 Gew.-% den Bispidonliganden gemäß der allgemeinen Formel (2) in einem Lösungsmittel enthält, umfassend mindestens zu 50 Gew.-%, vorzugsweise mindestens zu 70 Gew.-%, mehr bevorzugt mindestens zu 80 Gew.-%, noch mehr bevorzugt mindestens zu90 Gew.-%, noch weiter bevorzugt mindestens zu 95 Gew.-% und am meisten bevorzugt zu 100 Gew.-% einen oder mehrere Alkylester mindestens eines Alkohols, bereitgestellt wird.

5. Verfahren nach einem der vorstehenden Ansprüche, wobei das Lösungsmittel der in Schritt b) bereitgestellten Lösung eines Bispidonliganden mindestens zu 40 Gew.-% Diacetin enthält.

6. Verfahren nach einem der vorstehenden Ansprüche, wobei das Lösungsmittel der in Schritt b) bereitgestellten Lösung eines Bispidonliganden i) einen Diester von Glycerin und einen Triester von Glycerin oder ii) einen Monoester von Glycerin, einen Diester von Glycerin und einen Triester von Glycerin enthält.

7. Verfahren nach Anspruch 6, wobei das Lösungsmittel der in Schritt b) bereitgestellten Lösung eines Bispidonliganden, bezogen auf 100 Gew.-% des Lösungsmittels, zu 15 bis 50 Gew.-% Monoacetin, zu 30 bis 60 Gew.-% Diacetin, zu 10 bis 30 Gew.-% Triacetin und zu 1 bis 10 Gew.-% Glycerin enthält.

8. Verfahren nach einem der vorstehenden Ansprüche, wobei nach der Zugabe der in Schritt b) bereitgestellten Lösung eines Bispidonliganden in einem Lösungsmittel, umfassend mindestens einen Ester mindestens eines Alkohols, in die in Schritt a) bereitgestellte Lösung mindestens eines Metallsalzes in einem Lösungsmittel, umfassend Wasser oder eine Mischung aus Wasser und mindestens einem Alkylester mindestens eines Alkohols oder nach der Zugabe der in Schritt a) bereitgestellten Lösung mindestens eines Metallsalzes in einem Lösungsmittel, umfassend Wasser oder eine Mischung aus Wasser und mindestens einem Alkylester mindestens eines Alkohols, in die in Schritt b) bereitgestellte Lösung eines Bispidonliganden in einem Lösungsmittel, umfassend mindestens einen Ester mindestens eines Alkohols, das Molverhältnis des mindestens einen Metallsalzes und des Bispidonliganden in der Mischung zwischen 0,9 : 1 bis 1,1 : 1 und vorzugsweise 0,95 : 1 bis 1,05 : 1 liegt.

9. Verfahren nach einem der vorstehenden Ansprüche, wobei nach der Zugabe der in Schritt b) bereitgestellten Lösung eines Bispidonliganden in einem Lösungsmittel, umfassend mindestens einen Ester mindestens eines Alkohols, in die in Schritt a) bereitgestellte Lösung mindestens eines Metallsalzes in einem Lösungsmittel, umfassend Wasser oder eine Mischung aus Wasser und mindestens einem Alkylester mindestens eines Alkohols, oder nach der Zugabe der in Schritt a) bereitgestellten Lösung mindestens eines Metallsalzes in einem Lösungsmittel, umfassend Wasser oder eine Mischung aus Wasser und mindestens einem Alkylester mindestens eines Alkohols, in die in Schritt b) bereitgestellte Lösung eines Bispidonliganden in einem Lösungsmittel, umfassend mindestens einen Ester mindestens eines Alkohols, der Metallgehalt in der Mischung 0,01 bis 2 Gew.-%, vorzugsweise 0,5 bis 1,5 Gew.-% und mehr bevorzugt 0,8 bis 1,2 Gew.-% beträgt.

10. Verfahren nach einem der vorstehenden Ansprüche, wobei das Verfahren ferner einen Schritt d) zum Verdünnen der Lösung eines oder mehrerer Metallkomplexe gemäß der allgemeinen Formel (1) in einem Lösungsmittel, umfassend mindestens einen Alkylester mindestens eines in Schritt c) erhaltenen Alkohols, durch Zugeben des Lösungsmittels, umfassend mindestens einen Alkylester mindestens eines Alkohols, in diese umfasst, sodass die Konzentration des einen oder der mehreren Metallkomplexe gemäß der allgemeinen Formel (1) in der Lösung 0,01 bis 2 Gew.-% beträgt.

11. Lösung eines oder mehrerer Metallkomplexe gemäß der allgemeinen Formel (1) in einem Lösungsmittel, umfassend mindestens einen Alkylester mindestens eines Alkohols, die mit einem Verfahren nach einem der vorstehenden Ansprüche erhältlich ist.

12. Verwendung einer Lösung nach Anspruch 11 für das oxidative Trocknen einer Beschichtung, eines Lacks und/oder einer Tinte, die/der oxidativ trocknende Bindemittel und/oder Öle enthält, oder als Bleichmittel, wie in Wasch- und Reinigungsmitteln.

13. Verwendung nach Anspruch 12, wobei eine Lösung nach Anspruch 11 in Kombination mit mindestens einer weiteren Sikkativverbindung verwendet wird, wobei die mindestens eine weitere Sikkativverbindung vorzugsweise aus der Gruppe von Manganverbindungen, Vanadiumverbindungen, Zirconiumverbindungen, Kupferverbindungen, Strontiumverbindungen, Calciumverbindungen, Zinkverbindungen, Lithiumverbindungen, Lewis-Säuren von Kalium und/oder Aluminium, Acetaten und/oder Halogeniden von Kalium und/oder Aluminium ausgewählt ist, und mehr bevorzugt aus der Gruppe von Salzen organischer Säuren, Komplexen von Stickstoffdonorliganden, wobei die Liganden von dem in einem Verfahren nach einem der Ansprüche 1 bis 10 verwendeten Liganden verschieden sind, und Peroxiden ausgewählt ist.

## Revendications

1. Procédé de préparation d'une solution d'un ou plusieurs complexes métalliques selon la formule générale (1) dans un solvant comprenant au moins un alkylester d'au moins un alcool, dans lequel le procédé comprend les étapes consistant à :
a) fournir une solution d'au moins un sel métallique dans un solvant comprenant de l'eau ou un mélange d'eau et d'au moins un alkylester d'au moins un alcool, dans lequel l'au moins un métal de l'au moins un sel métallique est choisi dans le groupe constitué de Mn, Cu, Fe, Zn, Ti, V, Mo, W, Tc, In, Ga, Y, Re et combinaisons de ceux-ci,
b) fournir une solution d'un ligand bispidone selon la formule générale (2) dans un solvant comprenant au moins un alkylester d'au moins un alcool, dans lequel le solvant contient au moins 30 % en poids de diacétine, et
c) ajouter la solution d'un ligand bispidone fournie à l'étape b) dans la solution d'au moins un sel métallique fournie à l'étape a) ou inversement, et laisser réagir le mélange ainsi obtenu de manière à obtenir la solution d'un ou plusieurs complexes métalliques selon la formule générale (1) dans le solvant comprenant au moins un alkylester d'au moins un alcool,
dans lequel la formule générale (1) est :
[MₐL_{b}X_{c}]Y_{d} (1)
dans laquelle
M est un ion choisi dans le groupe constitué d'ions Mn, Cu, Fe, Zn, Ti, V, Mo, W, Tc, In, Ga, Y, Re et combinaisons de ceux-ci,
L est un ligand selon la formule générale (2) : 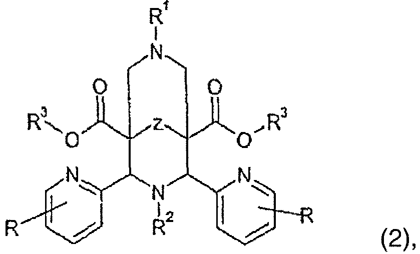
dans laquelle
R est hydrogène, hydroxyle ou alkyle en C₁₋₄,
R¹ est alkyle en C₁₋₄, aryle en C₆₋₁₀, pyridinyl-alkyle en C₁₋₄ ou (CH₂)ₖN(alkyle en C₁₋₄)₂,
R² est alkyle en C₁₋₂₀, aryle en C₆₋₁₀ ou pyridinyl-alkyle en C₁₋₄,
R³ est alkyle en C₁₋₄,
Z est C=O ou C(OH)₂ et
k est un nombre allant de 1 à 6,
X est un composé de coordination,
Y est un contre-ion
a est un nombre allant de 1 à 2,
b est un nombre allant de 1 à 2,
c est un nombre allant de 0 à 4, et
d est un nombre allant de 0 à 8, et
dans lequel solution signifie un mélange de deux composants chimiques ou plus, qui sont liquides, dans lequel après centrifugation de 100 ml de la solution dans une centrifugeuse pendant 30 minutes à 1 000 g, aucun sédiment visible n'est présent.

2. Procédé selon la revendication 1, dans lequel à l'étape a) une solution contenant, sur la base de la teneur en métal de l'au moins un sel métallique, 0,1 à 20 % en poids, de préférence 5 à 15 % en poids et plus préférablement 7 à 12 % en poids d'au moins un sel métallique dans un solvant comprenant de l'eau ou un mélange d'eau et d'au moins un alkylester d'au moins un alcool est fournie, dans lequel l'au moins un métal de l'au moins un sel métallique est choisi dans le groupe constitué de Mn, Cu, Fe, Zn, Ti, V, Mo, W, Tc, In, Ga, Y, Re et combinaisons de ceux-ci.

3. Procédé selon la revendication 1 ou 2, dans lequel le solvant de la solution d'au moins un sel métallique fournie à l'étape a) contient au moins 50 % en poids, de préférence au moins 80 % en poids, plus préférablement au moins 90 % en poids, encore plus préférablement au moins 95 % en poids, encore plus préférablement au moins 99 % en poids et le plus préférablement 100 % en poids d'eau ou d'un mélange d'eau et d'un ou plusieurs alkylesters d'au moins un alcool.

4. Procédé selon l'une quelconque des revendications précédentes, dans lequel à l'étape b) une solution contenant 0,1 à 20 % en poids, de préférence 5 à 15 % en poids et plus préférablement 7 à 12 % en poids du ligand bispidone selon la formule générale (2) dans un solvant comprenant au moins 50 % en poids, de préférence au moins 70 % en poids, plus préférablement au moins 80 % en poids, encore plus préférablement au moins 90 % en poids, encore plus préférablement au moins 95 % en poids et le plus préférablement 100 % en poids d'un ou plusieurs alkylesters d'au moins un alcool est fournie.

5. Procédé selon l'une quelconque des revendications précédentes, dans lequel le solvant de la solution d'un ligand bispidone fournie à l'étape b) contient au moins 40 % en poids de diacétine.

6. Procédé selon l'une quelconque des revendications précédentes, dans lequel le solvant de la solution d'un ligand bispidone fournie à l'étape b) contient i) un diester de glycérol et un triester de glycérol ou ii) un monoester de glycérol, un diester de glycérol et un triester de glycérol.

7. Procédé selon la revendication 6, dans lequel le solvant de la solution d'un ligand bispidone fournie à l'étape b) contient, sur la base de 100 % en poids du solvant, 15 à 50 % en poids de monoacétine, 30 à 60 % en poids de diacétine, 10 à 30 % en poids de triacétine et 1 à 10 % en poids de glycérol.

8. Procédé selon l'une quelconque des revendications précédentes, dans lequel après l'addition de la solution d'un ligand bispidone dans un solvant comprenant au moins un ester d'au moins un alcool fournie à l'étape b) dans la solution d'au moins un sel métallique dans un solvant comprenant de l'eau ou un mélange d'eau et d'au moins un alkylester d'au moins un alcool fournie à l'étape a) ou après l'addition de la solution d'au moins un sel métallique dans un solvant comprenant de l'eau ou un mélange d'eau et d'au moins un alkylester d'au moins un alcool fournie à l'étape a) dans la solution d'un ligand bispidone dans un solvant comprenant au moins un ester d'au moins un alcool fournie à l'étape b), le rapport molaire de l'au moins un sel métallique et du ligand bispidone dans le mélange est compris entre 0,9:1 et 1,1:1 et de préférence entre 0,95:1 et 1,05:1.

9. Procédé selon l'une quelconque des revendications précédentes, dans lequel après l'addition de la solution d'un ligand bispidone dans un solvant comprenant au moins un ester d'au moins un alcool fournie à l'étape b) dans la solution d'au moins un sel métallique dans un solvant comprenant de l'eau ou un mélange d'eau et d'au moins un alkylester d'au moins un alcool fournie à l'étape a) ou après l'addition de la solution d'au moins un sel métallique dans un solvant comprenant de l'eau ou un mélange d'eau et d'au moins un alkylester d'au moins un alcool fournie à l'étape a) dans la solution d'un ligand bispidone dans un solvant comprenant au moins un ester d'au moins un alcool fournie à l'étape b), la teneur en métal dans le mélange est de 0,01 à 2 % en poids, de préférence 0,5 à 1,5 % en poids et plus préférablement 0,8 à 1,2 % en poids.

10. Procédé selon l'une quelconque des revendications précédentes, dans lequel le procédé comprend en outre une étape d) consistant à diluer la solution d'un ou plusieurs complexes métalliques selon la formule générale (1) dans un solvant comprenant au moins un alkylester d'au moins un alcool obtenue à l'étape c) en y ajoutant le solvant comprenant au moins un alkylester d'au moins un alcool de sorte que la concentration du ou des complexes métalliques selon la formule générale (1) dans la solution est de 0,01 à 2 % en poids.

11. Solution d'un ou plusieurs complexes métalliques selon la formule générale (1) dans un solvant comprenant au moins un alkylester d'au moins un alcool pouvant être obtenue avec un procédé selon l'une quelconque des revendications précédentes.

12. Utilisation d'une solution selon la revendication 11 pour le séchage par oxydation d'un revêtement, d'un vernis et/ou d'une encre contenant des huiles et/ou liants à séchage oxydatif, ou comme agent de blanchiment, tel que dans des produits de lavage et de nettoyage.

13. Utilisation selon la revendication 12, dans laquelle une solution selon la revendication 11 est utilisée en combinaison avec au moins un autre composé siccatif, dans laquelle l'au moins un autre composé siccatif est de préférence choisi dans le groupe des composés de manganèse, composés de vanadium, composés de zirconium, composés de cuivre, composés de strontium, composés de calcium, composés de zinc, composés de lithium, acides de Lewis de potassium et/ou aluminium, acétates et/ou halogénures de potassium et/ou aluminium, et est plus préférablement choisi dans le groupe de sels d'acides organiques, de complexes de ligands donneurs d'azote, les ligands étant différents du ligand utilisé dans un procédé selon l'une quelconque des revendications 1 à 10, et de peroxydes.
